# EUROPEAN PATENT SPECIFICATION

(11) **EP 1 646 109 B1**
(45) Date of publication and mention of the grant of the patent: **29.10.2008**
(21) Application number: 04023951.9
(22) Date of filing: 07.10.2004
(51) Int. Cl.: H01Q 1/36, H01Q 1/38, H01Q 1/24, H01Q 9/42, H04M 1/05, H04M 1/60

(54) **Small highly-integrated wireless headset**
Kleine hochintegrierte drahtlose Hör-Sprechgarnitur
Petit casque téléphonique sans fil à haute intégration

(43) Date of publication of application: 12.04.2006
(73) Proprietor: Sony Ericsson Mobile Communications AB, 221 88 Lund (SE)
(72) Inventor: Rosenberg, Johan Anton Eduard, 7991 ED Dwingeloo (NL); Hin, Theodoor René Maria, 7827 GD Emmen (NL); Sampimon, Gerrit Johannes Willem, 7843 PV Erm (NL)
(74) Representative: Körber, Martin Hans

(56) References cited:
- EP-A- 1 443 591
- WO-A1-95/31048
- US-A1- 2003 157 972
- US-A1- 2004 062 412
- US-B1- 6 342 859

## Description

### TECHNICAL FIELD OF THE INVENTION

The present invention relates to a wireless communication device placed near the head such as a headset to be used e.g. in connection with telephones, announcement devices, or in connection with two-way radio equipment's or similar communication systems.

### DESCRIPTION OF RELATED ART

Wireless headset systems are used for hands free talking via a mobile terminal or a base station. In automobiles, for example, headsets allow to use mobile terminals without the necessity to hold the mobile terminal to the head while being in a conversation and thus, the driver of a vehicle may use both hands to control the automobile.

Most conventional wireless headsets are held on the head by a head band or a preshaped rigid supporting portion (ear hook), which is to be mounted behind the ear. A speaker portion is placed in the ear orifice, and a rigid microphone supporting boom extents towards the mouth. Microphone and speaker are connected to a transceiver for transmitting/receiving a voice signal via an antenna. The communication can be based on a communication protocol, such as the Bluetooth™, the WLAN (Wireless Local Area Network), the UMTS (Universal Mobile Telecommunication Systems), or the GSM (Global Systems for Mobile communication) protocol.

Nowadays, headsets have to be as small as possible, and nevertheless functional. In particular, high power efficiency, good acoustical and antenna performance are desired. Thereby, the antenna design is a main factor for the size of the headset, especially in the case when the antenna has to achieve a sufficient bandwidth to fulfil the requirements of the above communication protocols. Such antennas require a certain ground plane size to achieve the desired bandwidth. Generally, small antennas have a lower efficiency than big antennas, wherein a low efficiency wastes battery power.

A headset having a built-in wideband antenna which requires a small ground plane is described in EP1416585A1. In this design, the antenna arrangement has a three-dimensional structure, like a rectangular box, wherein one of the planes is the printed circuit board (PCB), on which the grounding layer and the radio circuits are provided. Although said document suggests to place components such as batteries inside the antenna structure, there is a lot of space that cannot be used for any other purpose. However, the ideal solution has no unused space (air) inside the product.

Document US 2004/0062412 A1 discloses a headset with an antenna, a speaker and a microphone. The speaker housing comprises a sound tube projecting into the ear canal of the user, thereby coupling the headset to the user's head. An antenna casing is further provided projecting from the headset in direction of the mouth of the user and containing additionally the microphone: Within the headset further a battery is provided as well as a printed circuit board, wherein the printed circuit board is positioned between the battery and the speaker.

Document EP 1 443 591 A1 discloses a printed circuit board with an integrated antenna structure. The antenna is provided on the circuit board having a meandering trace and being adapted to only transmit signals. This document only relates to a circuit board and does not disclose a headset or similar devices.

Document US 6, 342, 859 B1 describes a mobile phone having a specific ground arrangement for the antenna. This document is related to the position and implementation of the radiating ground elements within a conventional mobile phone. The mobile phone comprises a main housing incorporating a microphone and a loudspeaker. Further, an antenna is provided projecting from the main housing and being coupled to the specific ground arrangement.

Document US 2003/0157972 A1 discloses a headset which can be coupled to the ear of a user. The headset comprises a housing with a microphone and speaker, whereby the speaker projects from the housing and can be inserted into the ear of a user. Disposed within the housing is further an antenna and a logic circuit for controlling the operation of the headset. Attached to the housing is further a battery pack, which optionally can be mounted from the housing in order recharge it.

Document WO 95/31048 A1 reveals a radiation component to be used within conventional mobile phones. Here for a radiation shielding battery having a radiation shielding layer can be provided being disposed between the user's head and radiating components including an internally disposed radiation source and an antenna.

### SUMMARY

It is therefore an object of the present invention to improve the state of the art. It is an object of the present invention to provide a wireless communication device which has an improved integration level of the components. This object is achieved by a wireless communication device according to the enclosed independent claim 1. Advantageous features of the present invention are defined in the corresponding subclaims.

The present invention relates to a wireless communication device comprising a coupling means for coupling the wireless communication device to the ear of a user; an antenna for transmitting and receiving audio signals, an elongated printed circuit board including radio circuits and a ground plane for said antenna, a battery for powering said radio circuits mounted on said printed circuit board, a speaker and a microphone connected to said printed circuit board and wherein said microphone and said speaker are housed in separate enclosures, and an air tube which is mounted on the microphone and positioned above the printed circuit board, wherein said antenna is a monopole antenna printed on said printed circuit board comprising said ground plane and a meandered trace, wherein said ground plane forms a first part of said printed circuit board and said meandered trace forms a second part of said printed circuit board, and wherein said battery is positioned between the printed circuit board and the head of the user when the wireless communication device is coupled to the ear of a user by said coupling means and said battery is positioned between said microphone and said speaker.

Thus, with the present invention, all parts of the wireless communication device can be mounted against each other without disturbing each other which enables a high integration level. Further, the production is simpler compared to the prior art since the antenna is fixed inside the printed circuit board instead of a folded metal piece which is difficult to handle/arrange exactly, which makes it vulnerable to mistuning.

With the present invention, for reducing background noise and to avoid feedback's between speaker and microphone, the speaker is placed in a separate compartment apart from the microphone and/or the acoustic distance between speaker and microphone is increased by the air tube. Thus, speaker and microphone can be mounted closer to each other, what reduces the size of the wireless communication device, and a digital signal processor (DSP) which consumes space and power can be avoided.

The wireless communication device will be very close to a human head which is a bad environment for the antenna performance. With the present invention, for increasing the distance between antenna and the human head, the battery is positioned between the circuit board and the head of the user, and the antenna can be placed in the part of the wireless communication device opposite the earplug which is positioned from the head furthest.

Thus, the wireless communication device according to the present invention combines high power efficiency, good acoustical and antenna performance, and an high integration level.

In accordance with a further embodiment of the present invention, both, said ground plane and said meandered trace have an electrical length of a quarter of the wavelength or longer.

In a further embodiment of the present invention, the battery extends along the first part of the printed circuit board.

In a further embodiment of the present invention, the microphone is positioned in front of the battery along the second part of the printed circuit board.

In a further embodiment of the present invention, the microphone is connected acoustically with the outside via an air tube along the second part of the printed circuit board.

In a further embodiment of the present invention, the coupling means is an earplug to be inserted into the ear of a user which comprises the speaker.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

- Fig. 1: shows a small communication device according to the present invention embodied as a headset,
- Fig. 2: shows the antenna structure on the printed circuit board of the headset shown in Fig. 1,
- Fig. 3: shows the antenna structure and the radio circuits on the printed circuit board of the headset shown in Fig. 1,
- Fig. 4: schematically shows, in a side view, the arrangement of the components of the headset according to the present invention, and
- Fig. 5: shows a side view of the headset shown in Fig. 1.

### DETAILED DESCRIPTION OF EMBODIMENT

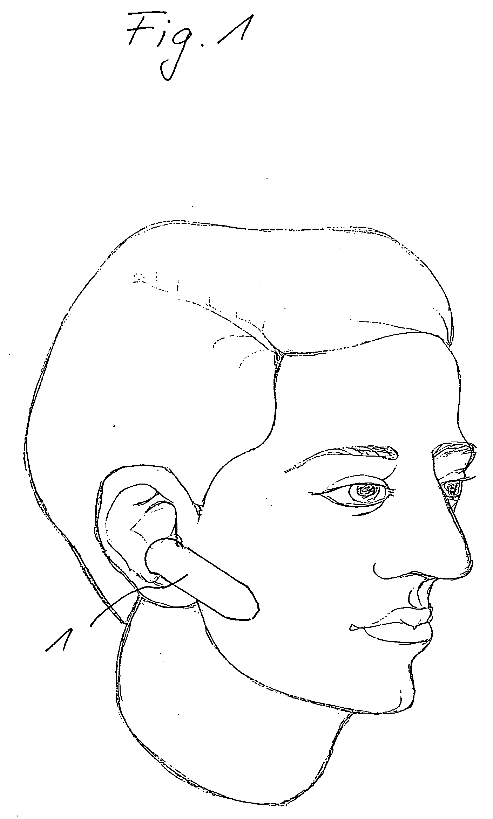

Fig. 1 shows a small communication device according to the present invention, which is a headset 1 adapted for wireless communication with an another communication device, which may be stationary or portable (not shown). The preferred type of device is a headset for short length high frequency wireless communication like Bluetooth™.

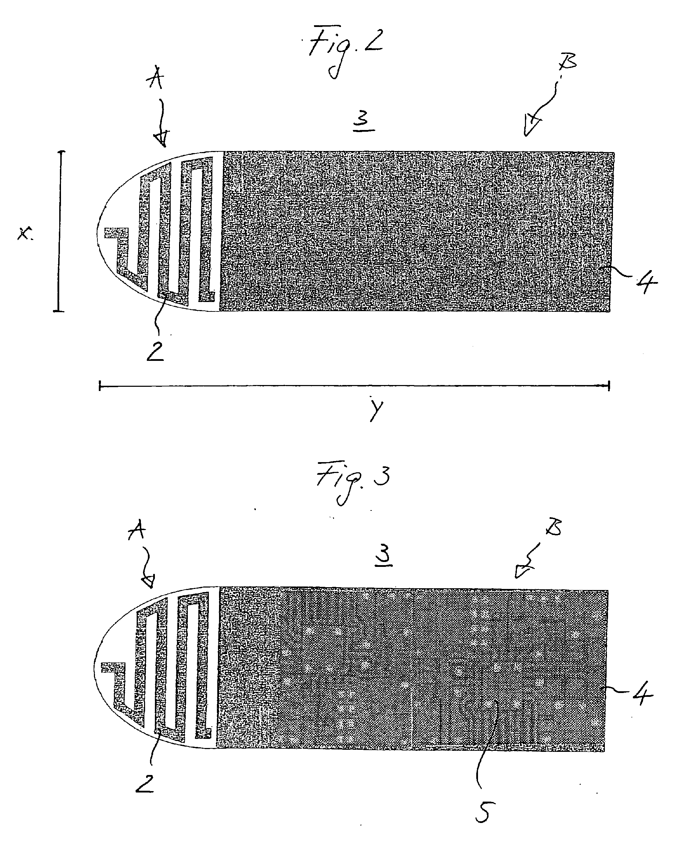

As shown in Fig. 2 (top view) the antenna is a meandered monopole on a printed circuit board 3 and build with a ground plane 4 and a trace 2, wherein both, the ground plane 4 and the meandered trace 2 are of a conductive material and have an electrical length of approximately a quarter of the wavelength or significantly longer than ¼wavelength. The shape of the printed circuit board 3 can be adapted to the design of the headset 1, so that there is a high flexibility in the visual design of the headset 1. The printed circuit board 3 shown in Fig. 2 is an elongated printed circuit board 3, wherein the side x is smaller than the side y (x » y). The printed circuit board 3 comprises a square part B which includes ground plane 4 and a rounded part A which includes the meandered trace 2. Generally, the printed circuit board 3 can be made out of all the known PCB materials and any number of layers. The preferred PCB material is a standard FR4 (Epoxyd) substrate material, which is a low cost material.

The antenna 2, 4 is very easy and cheap to manufacture and can be tuned simply by slight changes in length, wherein the length of the trace 2 mainly determines the resonant frequency of the antenna 2, 4. But like any other antenna types, the gain of a quarterwave monopole antenna will vary if parameters in the surroundings like case/box materials (not shown), distance to the ground plane 4, the size of the ground plane 4, width and thickness of the trace 2 are varied. If any of these parameters are changed, a retuning of the monopole PCB trace 2 length may be necessary for optimum performance in each application. The antenna can have any shape and can follow any designed board contour, wherein the antenna can be distributed also on both sides of the printed circuit board 3.

Fig. 3 shows an example on how the printed antenna 2, 4 is combined with the electronic components 5 on the same printed circuit board 3. As shown in Fig. 3, for small size, easy fabrication and low cost of the headset 1, in the region of the ground plane 4, the electronic components 5 such as radio module /RF (radio frequency) circuits and MMI (Man Machine Interface) are implemented on the same printed circuit board 3 as the antenna 2, 4, wherein the ground plane 4 can be a separate conductive layer on the printed circuit board 3 or the ground of the printed RF circuits.

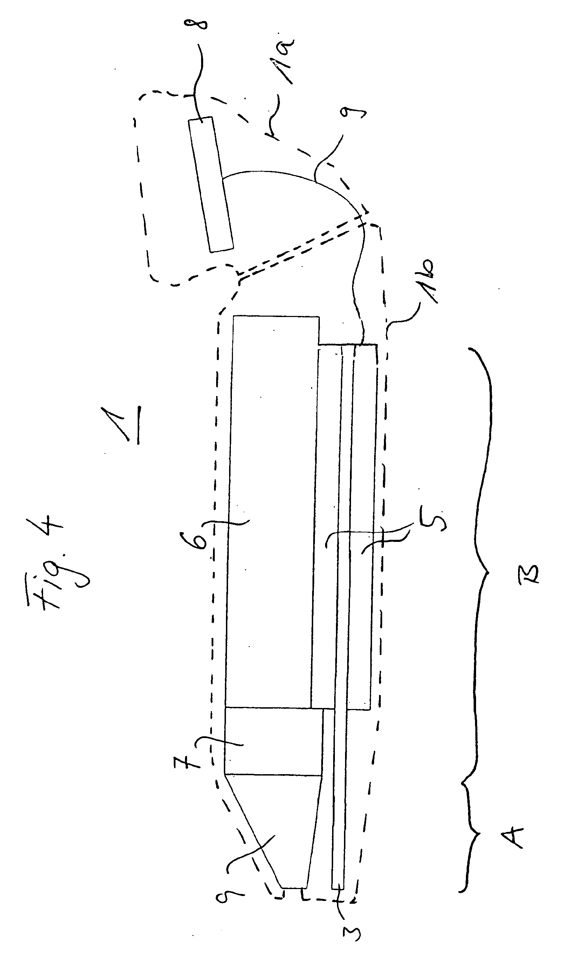

Fig. 4 schematically shows, in a side view, an arrangement of the components in the headset 1 according to the present invention, wherein A indicates the region of the meandered trace 2 and B indicates the region of the ground plane 4 (cf. Figs. 3 and 4). As shown in Fig. 4, electronic components 5 are implemented on both sides of the printed circuit board 3. A battery 6 is mounted on the top of the printed circuit board 3, and extends along the electronic components 5 of the printed circuit board 3. The preferred battery type is a lithium polymer battery which is very light and therefore the most suitable candidate, if the headset 1 does not have any bulky ear hook but is carried in the ear (in ear wearing) as shown in Fig. 1. A microphone 7 is positioned above the printed circuit board 3 in the region B of the ground plane 4 (not shown), and adjoins the battery 6. A speaker 8 is connected to the printed circuit board 4 via a line 9 and is arranged so that the battery 6 is between microphone 7 and speaker 8. The acoustic distance between speaker 8 and microphone 7 is increased by the air tube 9 which is mounted on the microphone 7 and positioned above the printed circuit board 3 in the region A of the meandered trace 2 (not shown). For decoupling the loudspeaker and microphone acoustically, as shown in Fig. 4 (dotted line), the speaker 8 is placed in a separate enclosure 1a so that the microphone 7 and the speaker 8 are housed in separate enclosures 1b and 1a, respectively.

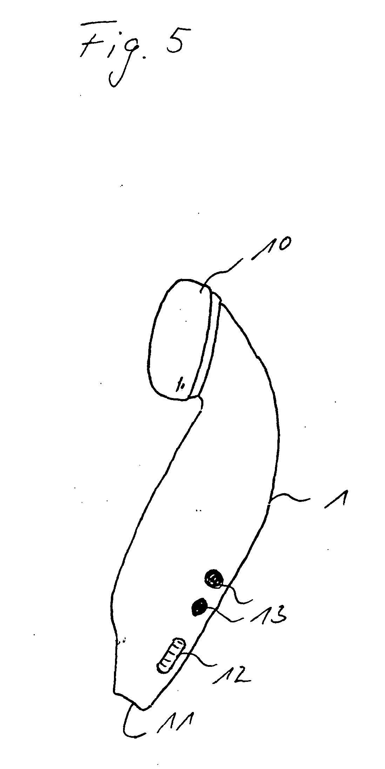

As shown in Fig. 5, the headset 1 comprises an earplug 10 to be inserted into the ear of a user in which the speaker 8 is housed (not shown). An opening 11 is in the lower end of the headset 1 and leads the sound via the air tube 9 to the microphone 7 (not shown). In this way, when the speaker is inserted into the ear of a user (inner concha), the emission of sound from the speaker 8 to the outside is lowered and thus, in combination with the extension of the acoustic distance between speaker 8 and microphone 7 via the air tube 9, the acoustical echo between speaker 8 and microphone 7 is further lowered. This allows, for a reduction of the size of the headset 1, to shorten the physical distance between speaker 8 and microphone 7 and to let a DSP away. Further, the position of the speaker 8 also cause a very low loss of sound pressure towards the ear. This means, due to the high coupling between the speaker 8 and the ear, the speaker 8 has only to produce a small sound pressure which further reduces said echo and the power consumption, and which allows the use of an even smaller speaker 8. The headset 1 further comprises a volume control 12 for the speaker 8 and control keys 13.

One of the disadvantages associated with conventional headsets is poor antenna transmission and reception, which is mainly due to the user's head which blocks or obstructs the emission of electromagnetic energy via the antenna. This is especially true when the antenna has an antenna element that provides an emission pattern that is radiated from a focused point of radiation. With the present invention, when the headset 1 is coupled to the ear of a user via the earplug 10, the battery 6 is positioned between the circuit board 3 and the head of the user. This guarantees a predetermined distance between the antenna 2, 4 and the head of the user and thus, a good antenna efficiency while having a simple construction.

## Claims

1. A wireless communication device comprising:
a coupling means (10) for coupling the wireless communication device (1) to the ear of a user;
an antenna (2, 4) for transmitting and receiving audio signals;
an elongated printed circuit board (3) including radio circuits (5) and a ground plane (4) for said antenna (2, 4);
a battery (6) for powering said radio circuits (5) mounted on said printed circuit board (3); and
a speaker (8) and a microphone (7) connected to said printed circuit board (3);
**characterized in that**
an air tube (9) is provided which is mounted on the microphone (7) and positioned above the printed circuit board (3),
said microphone (7) and said speaker (8) are housed in separate enclosures (1a, 1b) said antenna (2, 4) is a monopole antenna printed on said printed circuit board (3) comprising said ground plane (4) and a meandered trace (2);
said ground plane (4) forms a first part (B) of said printed circuit board (3) and said meandered trace (2) forms a second part (A) of said printed circuit board (3); and
said battery (6) is positioned between the printed circuit board (3) and the head of the user when the wireless communication device (1) is coupled to the ear of a user by said coupling means (10) and said battery (6) is positioned between said microphone (7) and said speaker (8).

2. A wireless communication device according to claim 1, wherein
said battery (6) extends along said first part (B) of the printed circuit board (3).

3. A wireless communication device according to claim 1 or 2, wherein
said microphone (7) is positioned in front of the battery (6) along said second part (A) of the printed circuit board (3).

4. A wireless communication device according to any one of the preceding claims, wherein
said microphone (7) is connected acoustically with the outside via an air tube (9) along said second part (A) of the printed circuit board (3).

5. A wireless communication device according to any one of the preceding claims, wherein
said coupling means (10) is an earplug to be inserted into the ear of the user which comprises said speaker (8).

6. A wireless communication device according to any one of the preceding claims, wherein both, said ground plane (4) and said meandered trace (2) have an electrical length of a quarter of the wavelength or longer.

## Patentansprüche

1. Drahtlos-Kommunikationsgerät, welches aufweist:
ein Kopplungsmittel (10) zur Verbindung des Funkkommunikationsgeräts (1) mit dem Ohr des Nutzers;
eine Antenne (2, 4) für Übertragung und Empfang von Audiosignalen;
eine längliche Leiterplatte (3) mit RF-Schaltungen (5) und einer Masseebene (4) für die Antenne (2, 4);
eine Batterie (6) zur Stromversorgung der auf der Leiterplatte (3) montierten RF-Schaltungen (5); und
einen Lautsprecher (8) und ein Mikrofon (7), welche mit der Leiterplatte (3) verbunden sind;
**dadurch gekennzeichnet, dass**
eine Luftleitung (9) bereitgestellt ist, die am Mikrofon (7) angebracht und oberhalb der Leiterplatte (3) angeordnet ist,
Mikrofon (7) und Lautsprecher (8) in getrennten Gehäusen (1a, 1b) untergebracht sind und die Antenne (2, 4) eine auf der Leiterplatte (3) aufgedruckte Monopolantenne ist, welche die Masseebene (4) und eine mäandernde Leiterbahn (2) aufweist;
die Masseebene (4) einen ersten Teil (B) der Leiterplatte (3) und die mäandernde Leiterbahn (2) einen zweiten Teil (A) der Leiterplatte (3) bilden; und
die Batterie (6) sich zwischen der Leiterplatte (3) und dem Kopf des Nutzers befindet, sobald das Funkkommunikationsgerät (1) mit dem Ohr eines Nutzers mittels des Kopplungsmittels (10) verbunden ist, und sie zwischen Mikrofon (7) und Lautsprecher (8) angeordnet ist.

2. Drahtlos-Kommunikationsgerät nach Anspruch 1, wobei
die Batterie (6) sich entlang des ersten Teils (B) der Leiterplatte (3) erstreckt.

3. Drahtlos-Kommunikationsgerät nach Anspruch 1 oder 2, wobei
das Mikrofon (7) vor der Batterie (6) entlang des zweiten Teils (A) der Leiterplatte (3) angeordnet ist.

4. Drahtlos-Kommunikationsgerät nach einem der vorstehenden Ansprüche, wobei das Mikrofon (7) über eine Luftleitung (9) entlang des zweiten Teils (A) der Leiterplatte (3) akustisch mit der Außenseite verbunden ist.

5. Drahtlos-Kommunikationsgerät nach einem der vorstehenden Ansprüche, wobei das Kopplungsmittel (10) ein Ohrenstöpsel ist, welcher in das Ohr des Nutzers eingeführt wird und den Lautsprecher (8) enthält.

6. Drahtlos-Kommunikationsgerät nach einem der vorstehenden Ansprüche, wobei sowohl Masseebene (4) wie mäandernde Leiterbahn (2) eine elektrische Länge von mindestens einem Viertel der Wellenlänge oder mehr aufweisen.

## Revendications

1. Dispositif de communication sans fil comportant :
un moyen de couplage (10) destiné à coupler le dispositif (1) de communication sans fil à l'oreille d'un utilisateur ;
une antenne (2, 4) destinée à émettre et recevoir des signaux audio ;
une plaquette allongée (3) à circuit imprimé comprenant des circuits radio (5) et un plan de masse (4) pour ladite antenne (2, 4) ;
une batterie (6) destinée à fournir de l'énergie auxdits circuits radio (5) montés sur ladite plaquette (3) à circuit imprimé ; et
un haut-parleur (8) et un microphone (7) connectés à ladite plaquette (3) à circuit imprimé ;
**caractérisé en ce que**
un tube à air (9) est prévu, lequel est monté sur le microphone (7) et est positionné au-dessus de la plaquette (3) à circuit imprimé,
ledit microphone (7) et ledit haut-parleur (8) sont logés dans des enceintes séparées (1a, 1b), ladite antenne (2, 4) est une antenne monopole imprimée sur ladite plaquette (3) à circuit imprimé comprenant ledit plan de masse (4) et une piste sinueuse (2) ;
ledit plan de masse (4) forme une première partie (B) de ladite plaquette (3) à circuit imprimé et ladite piste sinueuse (2) forme une seconde partie (A) de ladite plaquette (3) à circuit imprimé ; et
ladite batterie (6) est positionnée entre la plaquette (3) à circuit imprimé et la tête de l'utilisateur lorsque le dispositif (1) de communication sans fil est couplé à l'oreille d'un utilisateur par ledit moyen de couplage (10) et ladite batterie (6) est positionnée entre ledit microphone (7) et ledit haut-parleur (8).

2. Dispositif de communication sans fil selon la revendication 1, dans lequel
ladite batterie (6) s'étend le long de ladite première partie (B) de la plaquette (3) à circuit imprimé.

3. Dispositif de communication sans fil selon la revendication 1 ou 2, dans lequel
ledit microphone (7) est positionné devant la batterie (6) le long de ladite seconde partie (A) de la plaquette (3) à circuit imprimé.

4. Dispositif de communication sans fil selon l'une quelconque des revendications précédentes, dans lequel
ledit microphone (7) est connecté acoustiquement à l'extérieur par l'intermédiaire d'un tube à air (9) le long de ladite seconde partie (A) de la plaquette (3) à circuit imprimé.

5. Dispositif de communication sans fil selon l'une quelconque des revendications précédentes, dans lequel
ledit moyen de couplage (10) est un écouteur, qui comporte ledit haut-parleur (8), destiné à être inséré dans l'oreille de l'utilisateur.

6. Dispositif de communication sans fil selon l'une quelconque des revendications précédentes, dans lequel ledit plan de masse (4) et ladite piste sinueuse (2) ont tous deux une longueur électrique d'un quart de la longueur d'onde ou plus.
